# EUROPEAN PATENT APPLICATION

(11) **EP 3 242 467 A1**
(43) Date of publication of application: **08.11.2017**
(21) Application number: 16168406.3
(22) Date of filing: 04.05.2016
(51) Int. Cl.: H04L 29/12

(54) **METHOD AND APPARATUS FOR TRIGGERING A MANAGEMENT ACTION**

(71) Applicant: NTT DOCOMO, INC., Chiyoda-ku Tokyo (JP)
(72) Inventor: The designation of the inventor has not yet been filed
(74) Representative: Betten & Resch

(57) **Abstract**

A method for triggering a management action for a mobile terminal in a mobile communications network,
wherein said terminal having assigned a name to globally identify said terminal which is preferably a fully qualified domain name or a URI,
wherein said terminal further has an identifier to uniquely identify said terminal by entities inside said mobile communications network, and
the method comprising the following steps:
receiving at a name resolver from a node a request to resolve said name of the terminal, contacting, in response to said request, a controller that performs said management action;
wherein said method further comprises
communicating by said name resolver with a database that holds a name-to-controller id mapping;
determining by the database the controller ID of a controller from a plurality of controllers, which is currently responsible for the terminal, according to the name-to-controller ID mapping;
performing said management action for said terminal based on said identifier.

## Description

### FIELD OF THE INVENTION

The present invention relates to a method and an apparatus for triggering a management action.

### BACKGROUND OF THE INVENTION

It can happen in a mobile network that a terminal (also called mobile terminal sometimes in this text) either carries an IP address that changes from time to time or it does not carry a (valid) IP address at all. The first case (temporary IP address) occurs e.g. when using IPv4, where the overall address space is limited. Here, the mobile operator wants to make efficient use of the limited IP addresses and thus assigns IP addresses only to active terminals. The pool of IP addresses is distributed over the active terminals, and depending on the status of a terminal, it gets a different IP address from time to time.

The second case (no IP address) can occur in a new concept called SimpleCore, which is described in European patent application EP 15191135.1 filed by the same applicant as the present application, which is incorporated herein by reference. Here, IP addresses are assigned in a topologically correct way, and therefore depend on the location of the terminal. In case the terminal is in idle mode, it does not have contact with the network, and therefore does not have a (valid) IP address at all.

In both cases, it is not possible for a node from outside the network to establish a communication relation with the terminal, as the node does not know the terminal's current IP address.

It is therefore an object of the invention to establish a communication with or to perform any management action at a mobile terminal from outside of the mobile network.

One solution is DynDNS: in this case, the terminal is assigned a name, and a name server is responsible to store a name-address mapping. Every time the address of the terminal changes, it pushes the new address towards the name server, that upon this updates the mapping. The node only needs to know the name and can perform a lookup for the address with the name server. This method, however, does not work in case a terminal does not carry an IP address, or the terminal is in IDLE mode, where it does not want to transmit data to save energy and therefore will not want to update the name server. Furthermore, the terminal must be aware of the existence of the name server and have a direct relation to it.

### SUMMARY OF THE INVENTION

According to one embodiment there is provided a method for triggering a management action for a mobile terminal in a mobile communications network,
wherein said terminal having assigned a name to globally identify said terminal which is preferably a fully qualified domain name or a URI,
wherein said terminal further has an identifier to uniquely identify said terminal by entities inside said mobile communications network, and
the method comprising the following steps:
receiving at a name resolver from a node a request to resolve said name of the terminal, contacting, in response to said request, a controller that performs said management action; wherein the step of contacting the controller comprises
communicating by said name resolver with a database that holds a name-to-controller id mapping;
determining by the database the controller ID of a controller from a plurality of controllers according to the name-to-controller ID mapping;
performing said management action for said terminal based on said identifier.

By providing an network external name that can be shared to anybody and the ability of the mobile network to receive this name and translate it into the name of the entity (controller) that internally manages the UE, it becomes possible to allow external entities to trigger actions within the network, without knowing the network internal identifier.

In this manner the management action can be performed based on a globally unique name, even if the terminal for some reason does not have a valid IP address assigned.

According to one embodiment the method comprises:
obtaining by said name resolver the determined controller ID from the database and contacting by said name resolver the controller based on the controller ID and providing said name to the controller.

This has the advantage that the responsible controller then is aware of the name. The controller may then use this name to obtain the identifier, e.g. from the database. It is then not necessary to disclose the (internal) identifier to the resolver.

According to one embodiment the database further holds a name-to-identifier mapping,
the step of contacting the controller further comprises:
obtaining by said name resolver the determined controller ID and said identifier from the database and
contacting by said name resolver the controller based the controller ID and providing said identifier to the controller.

This has the disadvantage that the identifier is disclosed to the resolver, which may be undesirable in terms of security. However, it has the advantage that it reduces the amount of signalling.

According to one embodiment the method comprises: directly contacting the determined controller based on the controller ID by the database.

In this manner the internal identifier does not need to be disclosed to the resolver.

According to one embodiment the management action comprises one or more of the following:
Paging said terminal based on said identifier;
Assigning an IP address to said terminal.

These are suitable implementations of the management action enabling the assignment of an IP address in case the terminal does not have a valid IP address.

According to one embodiment the terminal is assigned to a first slice, i.e. a logical partition of the mobile network,
wherein said controller is an operation and maintenance system that controls the assignment of terminals to slices,
said method further comprising after the step of determining the identifier:
triggering by said controller the assignment of the mobile terminal to a second slice.

According to one embodiment said controller is a subscription management system that controls the subscription of terminals,
wherein said management action is a subscription change request to change subscription information for said terminal,
said method further comprising after the step of determining the identifier:
triggering by said controller the change of subscription information according to said subscription change request.

These are suitable implementations of the management action.

According to one embodiment the terminal is a mobile terminal, UE, said UE being connected to a cellular communication network and being located in one of a plurality of cells in the cellular communication network, and
said method further comprising after the step of determining the identifier:
triggering by said controller the transmission of a paging message containing said identifier in said plurality of cells;
receiving a response from said terminal to said paging message by said cellular communication network via the cell within which said terminal is located,
assigning said address to said terminal.

This is a suitable implementation of an embodiment for assigning an IP address to a mobile terminal.

According to one embodiment said controller is an Mobile Management Entity, MME,
wherein said database that holds a name-to-controller mapping is included in a Home Subscriber Server, HSS,
wherein the identifier is an International Mobile Subscriber Identity, ISMI or a global unique terminal ID different from IMSI, like a GUTI.

This is a suitable implementation of the entities involved in a method according to the invention.

According to one embodiment the method further comprises:
paging the UE by the MME;
receiving at the UE said paging message;
transmitting from the UE to the MME a request for connecting to the communication network; deriving at the MME an IP address from an IP address allocator based on the current location of the UE;
forwarding the IP address to the UE.

This enables IP address allocation to the terminal in response to the name resolving request.

According to one embodiment the step of paging the UE occurs in said plurality of cells of the communication network,
said plurality of cells are preferably included in a tracking area list of the UE,
the current location of the UE is at the cell of the plurality of cells the UE is currently located in.

This enables an efficient paging to locate the UE.

According to one embodiment there is provided an apparatus for triggering a management action for a mobile terminal in a mobile communications network,
wherein said terminal having assigned a name to globally identify said terminal which is preferably a fully qualified domain name or a URI,
wherein said terminal further has an identifier to uniquely identify said terminal by entities inside said mobile communications network, and
the apparatus comprising the following steps:
a name resolver for receiving from a node a request to resolve said name of the terminal,
said name resolver being adapted for contacting, in response to said request, a controller that performs said management action;
wherein said apparatus further comprises
said name resolver being adapted for communicating with a database that holds a name-to-controller id mapping;
said database being adapted for determining the controller ID of a controller from a plurality of controllers, which is currently responsible for the terminal, according to the name-to-controller ID mapping;
said name resolver or said controller being adapted to performing said management action for said terminal based on said identifier.

In this manner an apparatus according to an embodiment of the invention may be implemented.

According to further embodiments the apparatus may contain entities, modules or means for carrying out methods according to embodiments of the invention.

According to a further embodiment there is provided a computer program, which when being executed on a computer, enables said computer to carry out a method according to one of the embodiments of the invention.

### DESCRIPTION OF THE DRAWINGS

Fig. 1 schematically illustrates an embodiment of the invention.
Figures 2 and 3 illustrate sequence diagrams illustrating alternative embodiments of the invention.
Fig. 4. shows a sequence diagram illustrating a further embodiment of the invention.

### DETAILED DESCRIPTION

Before describing embodiments of the invention, at first some terms, which will be used during the description, will be explained.
- eNB: evolved NodeB (base station)
- DHCP: Dynamic Host Configuration Protocol
- DNS: Domain Name System
- EPC: Evolved Packet Core
- GUTI: Globally Unique Temporary Id
- IMSI: International Mobile Subscriber Identity
- IP: Internet Protocol
- MME: Mobility Management Entity
- NAT: Network Address Translation
- P-GW: Packet Data Network Gateway
- S-GW: Serving Gateway
- terminal: User Equipment

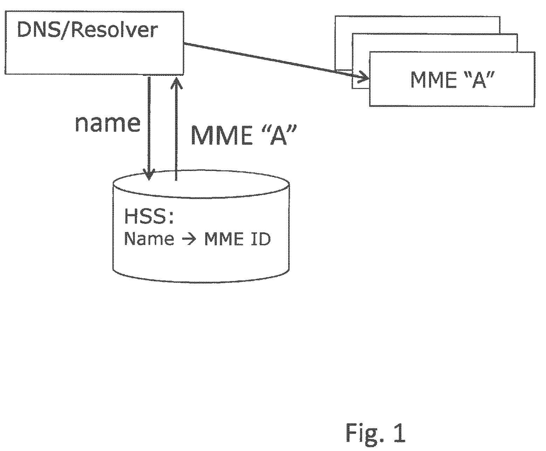

An embodiment according to the invention will now be described in connection with Fig. 1.

Assume that a management action is to be triggered for a mobile terminal in a mobile communications network. The terminal may not have a valid IP address (e.g. due to movement of the terminal, or because it is in idle mode), the terminal, however, according to the embodiment has assigned a globally unique identifier, e. g. a URI or a fully qualified domain name. Such a globally known name of a UE means that the name can be shared with any entity that wants to contact the UE. It should be noted that such a global name has to be distinguished from network internal IDs (like IMSI, GUTI), which should not be exposed outside the mobile network and are therefore not suited.

Besides that "name" being a globally unique identifier, which identifies the terminal uniquely towards the outside world, especially towards the world outside the mobile communications system, the terminal further has assigned another identifier, which uniquely identifies the terminal towards entities inside the mobile communications network. This (second) identifier may be e.g. the IMSI, or it may also be another unique identifier, e.g. a globally unique temporary identifier (GUTI).

According to the method of the embodiment an entity operating as a name resolver, which may e.g. be implemented by a DNS server or any other entity capable of name resolving, receives a request to resolve the name (the globally unique name). In response to this request there is then contacted a controller to thereby trigger a management action to be performed by the controller with respect to the mobile terminal.

The method further comprises to communicate by the name resolver with a database, which holds a name-to-controller ID mapping. The database then determines the controller ID among a plurality of controllers, which is currently responsible for controlling the mobile terminal, according to the name-to-controller ID mapping. The "controller" according to one embodiment is the entity in the mobile network that manages the UE and its connections; it is responsible for things like ATTACH and mobility management. A concrete implementation of a controller according to one embodiment is e.g. the MME in a today's network.

In this manner the controller, which is currently responsible for the mobile terminal, can be determined. Fig. 1 schematically illustrated this method. In Fig. 1 the resolver is illustrated as a DNS server, and the database is shown exemplarily to be implemented by a home subscriber server HSS. The controller in this example is a mobile management entity MME, and the HSS contains a database, which maps the name to the MME ID, the latter being the ID of the currently responsible controller. In the example of Fig. 1 the MME ID, which corresponds to the name is shown as "MME A" and is returned to the resolver, which then can contact directly MME A to trigger a management action.

The management action by the MME according to one embodiment uses the identifier (an internal identifier identifying the terminal towards the entities inside the network).

The management action to be carried out may be explicitly requested by a certain command sent to the resolver specifying the action, or it may be implicitly determined just based on the resolving request being sent to the resolver.

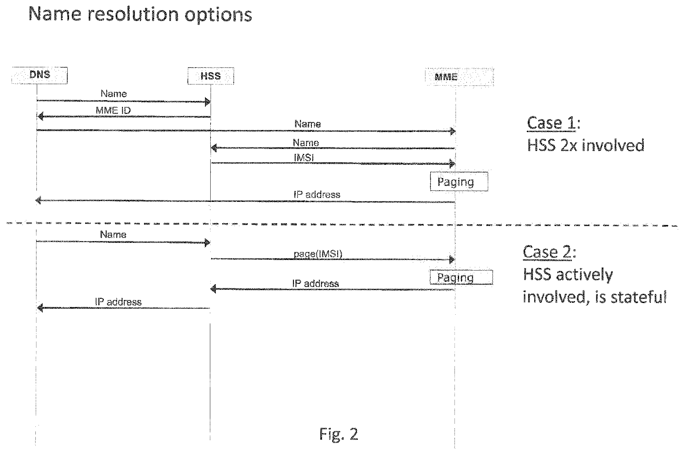

According to one embodiment the name resolver obtains the determined controller ID from the database and then contacts the controller with the provided ID. The controller then may contact the database to retrieve the (internal) identifier, which then may be used to perform the management action. This is schematically illustrated as "case 1" in Fig. 2. In this example shown in Fig. 2 the (internal) identifier is an IMSI (International Mobile Subscriber Identity), and the "management action" is a paging procedure, which may then initiate the assignment of an IP address. It should, however, be understood that according to other embodiments other actions than paging and returning an IP address are possible as management actions, and other identifiers than an IMSI can be used as (internal) identifier.

According to one embodiment the database holds a name-to-identifier mapping, and the step of contacting the controller further comprises to obtain by the name resolver the determined controller ID and the identifier from the database. The name resolver then contacts the controller based the controller ID and providing said identifier to the controller.

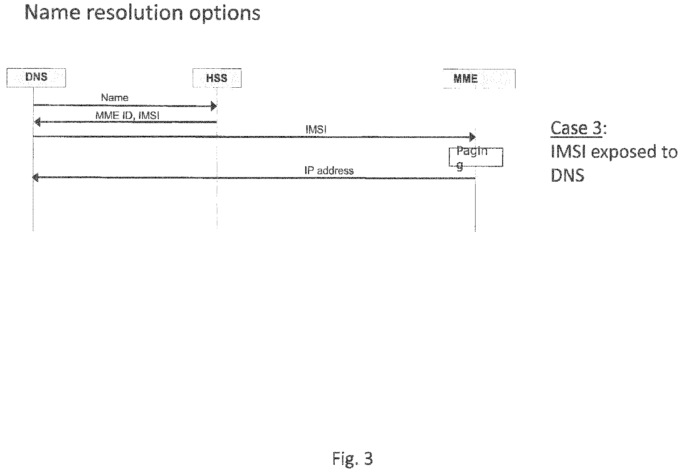

This is illustrated in "case 3" illustrated in Fig. 3. It is not so advantageous in terms of security, since the internal identifier (here shown as IMSI) is disclosed to the name resolver (the DNS server).

According to one embodiment the method comprises: directly contacting the determined controller based on the controller ID by the database. This is schematically illustrated as "case 2" in Fig. 2. In this embodiment it is not necessary to disclose the identifier to the resolver.

According to one embodiment the terminal is a mobile terminal, UE. The UE is connected to a cellular communication network and is located in one of a plurality of cells in the cellular communication network. The controller in this embodiment is a Mobile Management Entity, MME, and the database that holds a name-to-controller mapping is included in a Home Subscriber Server, HSS. The (internal) identifier is an International Mobile Subscriber Identity, ISMI or a global unique temporary ID different from IMSI.

The method in this embodiment comprises, after having determined the MME responsible for the terminal and the further having determined the identifier to trigger by the MME the transmission of a paging message containing said identifier in the plurality of cells controlled by the MME. Then there is received a response from the terminal to the paging message by said cellular communication network via the cell within which said terminal is located, and thereafter an address is assigned to the terminal.

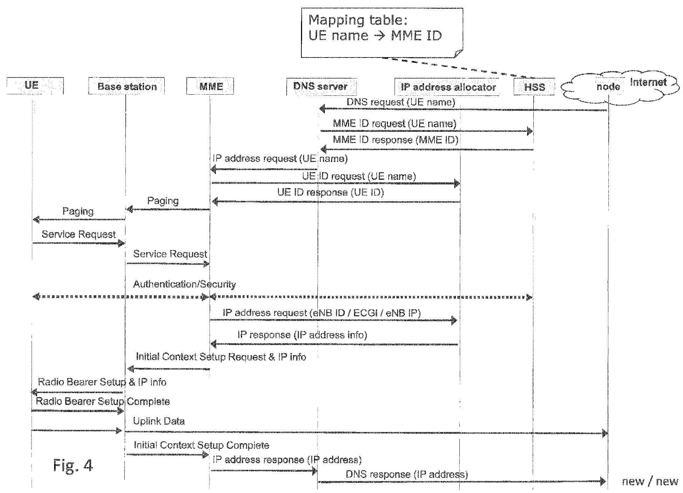

A further embodiment will now be described in somewhat more detail in connection with Fig. 4.

A request (DNS request UE name) is made through the Internet towards a resolver, here the DNS server, and this request contains a name (UE name) globally identifying a mobile terminal (such as e.g. bob.example.com or any other address, URI or fully qualified domain name) connected to a mobile communications network via a base station, through one of a plurality of possible cells.

This request according to one embodiment will be interpreted by the DNS server such that it should perform as a management action the return of an IP address for the terminal identified by the name. If the terminal does not have a valid IP address, which could be returned, the method then proceeds with sending an MME ID request together with the UE name to the HSS, which looks up a database containing a UE name-MME ID-mapping and returns the MME ID of the MME responsible for the terminal. The DNS server may then contact the MME together with the UE name, and the MME then looks up the (internal) identifier of the UE (shown as UE ID in Fig. 4). The method may then proceed with a "paging" step to page the UE based on the UE ID, the UE then returns a service request to the base station, which in turn forwards a service request to the MME. Then an authentication/security operation is performed between UE and MME and MME and HSS, and the method proceeds with the request for an IP address to be assigned to the UE by an IP address allocator. For that request as parameters the base station ID, the ECGI and/or the base station IP address may be sent to the IP address allocator, which may respond by returning an IP address. The MME then proceeds with an initial context setup and forwards the IP address to the base station, which responds with a radio bearer setup towards the UE. Once the initial context setup is signalled to be complete between base station and MME, the MME may forward a response with the IP address (IP address response) to the DNS server, which forwards a DNS response to the entity of the Internet, which has dispatched the DNS request. Then the procedure is completed, the mobile terminal has been assigned an IP address, and an IP connection setup between the requesting entity and the mobile terminal is possible.

This procedure may be executed in any case where the mobile terminal does not have a valid IP address, e.g. because it has moved to another base station or because it has been in IDLE mode and moved.

With such a method an IP address can still be assigned even if the mobile terminal was in IDLE mode and has changed to another base station.

According to one embodiment a key element to enable triggering a management action for a mobile terminal via a globally unique name is a two step mapping: "terminal name → UE (internal) identifier", plus another mapping "terminal name → MME ID", which maps the globally unique name of the UE to the currently responsible MME, i.e. controller. While there are different ways how to implement this mapping and distribute the tasks over the elements in the mobile network, this mapping process will be explained generically below:
- The globally unique name is assigned to the terminal. The terminals' mobility and presence in the network is according to embodiments of the invention managed by one of several MMEs, i.e. controllers in the network. Thus, a first step is to determine the responsible MME by the name → MME ID mapping.
- In the second step, it is necessary to determine the network internal identifier of the terminal. This can be a static identifier that is valid for the whole lifetime of the terminal (e.g. the IMSI), or a temporary identifier that may be changed from time to time (e.g. the GUTI). This is achieved by the name → identifier mapping. Lastly, for an embodiment where the management action to be performed is "paging", the identifier → address mapping is performed to determine the current terminal's address (or first assign a new one to the terminal, and then use this newly assigned address as the current one).

This approach has the following advantages:
- The globally unique name can be published without exposing the network internal identifier. specified mapping above allows the terminal to either change its address, or be attached to the network without an address, and only get an address upon demand.
- Only a single interaction from the mobile network to name server is needed.
- The proposed approach suggests a name→MME ID mapping and corresponding lookup upon receiving a trigger for a management actionrequest for name resolution. This makes the name server to MME association dynamic and also allows the existence of multiple MMEs for load balancing. Furthermore, the terminal can change MMEs if needed.
- The proposed approach enables IDLE mode for the SimpleCore concept. As such it allows the terminal to go to IDLE mode and thus save energy.
- Through the triggering of paging via a DNS lookup, no data plane node for buffering downlink packets is necessary (in EPC, this is the role of the SGW). This allows removing this node, while still being able to reach the terminal. This reduces cost.

Further embodiments will be described in somewhat more detail for the illustrative case that the management action to be triggered is paging, followed by returning an IP address of the mobile node.

The basic idea according to one embodiment is to assign a "globally unique name" to the terminal (e.g. bob.example.com) that the external server (which may also be called node) can use to lookup the current IP address of this terminal via DNS. For that purpose a clever approach to determine the current IP address of the terminal is determined (e.g. in the case of SimpleCore and a terminal in IDLE mode, when the terminal does not have a valid IP address at this point in time). For that purpose the mobile network will execute a paging and IP address assignment procedure as outlined above and returns the newly assigned IP address via DNS to the requesting server.

According to an embodiment a key concept to achieve this is to enable a mapping between the three different types of identifiers that a terminal carries:
- terminal name: this is the name assigned to the terminal in the context of DNS that must be known to the server that wants to contact the terminal, e.g. bob.example.com.
- terminal identifier (terminal ID): this is the identity of the terminal in the context of the mobile network. Examples of this identity are the IMSI (International Mobile Subscriber Identity) and its temporary version, the GUTI (Globally Unique Temporary Id). This identity is used as key to information relating to this terminal, e.g. in the MME or HSS.
- terminal IP address: this is the network layer IP address assigned to the terminal. In the SimpleCore concept, it can change with every new base station the terminal is connected to. As such, the IP address might be ever changing, and thus is not a stable handle to identify or contact the terminal. Also in case of using IPv4, the IP address will change due to the limited amount of such addresses that are available.

The mobile network performs this mapping with the following steps:
1. The mobile network receives the request for the terminal name at a name server (DNS server),
2. determines the MME currently responsible for this terminal,
3. resolves the name to the terminal identifier,
4. triggers the paging for the terminal carrying this identifier,
5. assigns an IP address to the terminal, and
6. returns this IP address via DNS.

Particularly important here is the second step, because depending on where in the network the terminal is currently located, a different MME is responsible for the terminal. As the terminal's movements are not constrained and also not known to the external server, the mobile network must first locate the currently responsible MME, such that this MME can then perform the paging. As currently standardized, this can be done via the HSS (Home Subscriber Server) that always carries the information, which MME is currently responsible for a certain terminal. Whenever the MME changes (and in some other situations), the HSS is updated by the MME with an "update location request"..

According to one embodiment, the HSS is extended to store also the terminal's name besides the other terminal information elements it already stores. Thus, the MME currently responsible for the terminal can be determined via a lookup by the HSS of the form "terminal name → MME ID", such that the network internal terminal identifier does not have to be exposed outside the network.

One possible option of how to implement these six steps is outlined with the complete signaling flow in Fig. 4. Here, the DNS server determines the currently responsible MME by contacting the HSS. Then, the DNS server forwards the request to the currently responsible MME. The MME derives from the terminal's name the terminal ID (e.g. its GUTI) via a request to the HSS. With this, it can then trigger the paging.

Overall, there are proposed - as alternatives - three different options of how to implement steps 2 and 3, these are depicted in Fig. 2 and 3. The figures show for each signaling flow the information elements that must be exchanged. Note that the signaling flow from Fig. 4 corresponds to case 1 that is also shown in Fig. 2. Each of these options has advantages and disadvantages, which are also listed in the figures:
1. In option 1 (case 1 shown in Fig. 2), the only entity that needs to hold additional information on the terminal name (beyond the DNS server) is the HSS as outlined already above. As such, the MME, after receiving a request to provide an IP address for a given terminal name, first must contact the HSS to discover the terminal identifier. Thus, the HSS is involved twice in the signaling flow, putting additional load on the HSS.
2. In option 2 (case 2 in Fig. 2), the HSS receives the name resolution request, determines the responsible MME, and forwards the request accordingly to this MME, which triggers the paging. While the signaling flow is straightforward and easy, this has the disadvantage that the HSS it actively involved in the signaling and thus needs to hold state information about the ongoing requests that it handles. In other options, the HSS can be stateless, it only has to answer to requests.
3. Option 3 is shown as case 3 in Fig. 3. Here, the HSS returns both the identifier of the responsible MME as well as the terminal ID to the DNS server. With this information, the DNS server can contact the correct MME, which in turn pages the terminal and returns the newly assigned IP address. Also this option has a very simple signaling procedure.
   - In case the IMSI is used as terminal ID and thus exposed to the DNS, this might be considered a disadvantage: the DNS is reachable from outside the mobile network and might be an easy target for attacks. Thus, an attacker might be able to steal IMSI information, which should be kept secret in all circumstances.
   - Instead, the HSS can return a temporary identifier for the terminal, e.g. the GUTI. However, in this case the necessary procedures to inform the HSS about this temporary identifier (which is only stored in the MME according to the standard TS23.401) need to be implemented.

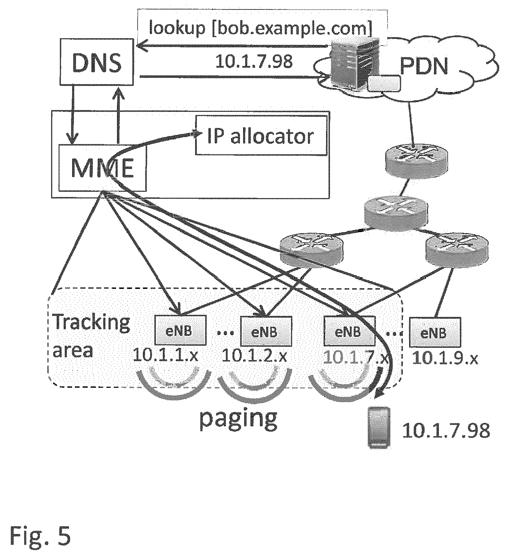

A further embodiment according to the invention is schematically illustrated in Fig. 5. A name request using the name bob.example.com is sent from a packet based network PDN (typically the internet) to the DNS server, which in turn contacts the MME after the MME ID has been determined based on name - MME ID mapping (not shown in Fig. 5). The MME pages the base stations, which belong to the tracking area of the responsible MME to identify/locate the mobile terminal corresponding to the name. The thus found terminal then requests the assignment of an IP address from the IP allocator, and then using this address (10.1.7.98 in Fig. 5) a connection with the requesting entity from the PDN.

The invention has been described in the foregoing by means of embodiments for triggering a management action. The management action, which is triggered by a request to a resolver can be a paging of a mobile terminal, or it can be the assignment of an IP address to a mobile terminal, or a combination of both. The triggering of the management action can be "explicit" by identifying explicit in the request to the resolver the management action, or it can be implicit such that the resolver interprets the reception of a name as a request to trigger the management action.

Besides paging and assigning of an IP address, other management actions may be triggered by a request to a resolver from an external node, which therefore form other embodiments of this invention.

In one possible embodiment, the management action to be triggered is a "Volume increase" related to subscription data of the mobile terminal. Assume that the mobile terminal is owned by a child that has a prepaid contract with 1GB of data, which is preconfigured (also) in the mobile terminal. Furthermore, the mobile terminal is configured to block access to video content as soon as the remaining data volume falls below a certain threshold. Via an appropriate interface from outside the network, the father may want to add another 1GB of data volume to enable again video streaming. This is both configured in the network as well as the UE. The "Management action" that is triggered in this embodiment is changing the subscription information by the controller in both network and the UE. In this embodiment, the management action performed inside the network is triggered by a request to perform a corresponding management action transmitted from the outside of the network by the node to a name resolver.

A further embodiment encompasses a management action in a machine-type-communication (MTC) configuration. Assume the mobile terminal is a low power water temperature sensor that regularly reports the current temperature of a lake. The network access behaviour of this terminal is sporadic with a few bytes of data, so it is served by a logical partition of the network ("network slice" in 5G terminology) for such applications that provides "low throughput, high delay". Assume that now the owner of the sensor wants to update the sensor's firmware. For this he needs to move the sensor to another network slice that offers high throughput. The owner of the sensor can for this send a request of the form (UE's DNS name, move to other slice) to the mobile network. The controller - which in this embodiment is an operation and maintenance system that controls slices and their resources - then triggers the assignment of more network resources/another slice to the UE. In this embodiment, the management action is thus explicitly identified by the instruction "move to other slice" transmitted in the request to the mobile network.

## Claims

1. A method for triggering a management action for a mobile terminal in a mobile communications network,
wherein said terminal having assigned a name to globally identify said terminal which is preferably a fully qualified domain name or a URI,
wherein said terminal further has an identifier to uniquely identify said terminal by entities inside said mobile communications network, and the method comprising the following steps:
receiving at a name resolver from a node a request to resolve said name of the terminal,
contacting, in response to said request, a controller that performs said management action;
wherein said method further comprises
communicating by said name resolver with a database that holds a name-to-controller id mapping;
determining by the database the controller ID of a controller from a plurality of controllers, which is currently responsible for the terminal, according to the name-to-controller ID mapping;
performing said management action for said terminal based on said identifier.

2. The method according to claim 1 wherein the step of contacting the controller further comprises
obtaining by said name resolver the determined controller ID from the database and contacting by said name resolver the controller based on the controller ID and providing said name to the controller.

3. The method according to claim 1,
wherein the database further holds a name-to-identifier mapping,
the step of contacting the controller further comprises
obtaining by said name resolver the determined controller ID and said identifier from the database and
contacting the controller by said name resolver based the controller ID and providing said identifier to the controller.

4. The method according to claim 1 wherein the step of contacting the controller further comprises
directly contacting the determined controller based on the controller ID by the database.

5. The method according to one of claims 1 to 4, wherein said management action comprises one or more of the following:
Paging said terminal based on said identifier;
Assigning an IP address to said terminal.

6. The method according to one of claims 1 to 5, wherein said management action comprises one or more of the following
update subscription information;
update UE to network slice assignment;
update resources assigned to the UE.

7. The method according to one of claims 1 to 6,
wherein the terminal is a mobile terminal, UE, said UE being connected to a cellular communication network and being located in one of a plurality of cells in the cellular communication network, and
said method further comprising after the step of determining the identifier:
triggering by said controller the transmission of a paging message containing said identifier in said plurality of cells;
receiving a response from said terminal to said paging message by said cellular communication network via the cell within which said terminal is located,
assigning said address to said terminal.

8. The method according to claim 7,
wherein said controller is an Mobile Management Entity, MME,
wherein said database that holds a name-to-controller mapping is included in a Home Subscriber Server, HSS,
wherein the identifier is an International Mobile Subscriber Identity, ISMI or a global unique terminal ID different from IMSI.

9. The method according to claim 8, further comprising:
paging the UE by the MME;
receiving at the UE said paging message;
transmitting from the UE to the MME a request for connecting to the communication network;
deriving at the MME an IP address from an IP address allocator based on the current location of the UE;
forwarding the IP address to the UE.

10. The method according to one of claims 5, 6, 7, 8 or 9,
wherein the step of paging the UE occurs in said plurality of cells of the communication network,
wherein said plurality of cells are preferably included in a tracking area list of the UE, wherein the current location of the UE is at the cell of the plurality of cells the UE is currently located in.

11. The method according to one of claims 1 to 5,
wherein the terminal is assigned to a first slice, i.e. a logical partition of the mobile network,
wherein said controller is an operation and maintenance system that controls the assignment of terminals to slices,
said method further comprising after the step of determining the identifier:
triggering by said controller the assignment of the mobile terminal to a second slice.

12. The method according to one of claims 1 to 5,
wherein said controller is a subscription management system that controls the subscription of terminals,
wherein said management action is a subscription change request to change subscription information for said terminal,
said method further comprising after the step of determining the identifier:
triggering by said controller the change of subscription information according to said subscription change request.

13. An apparatus for triggering a management action for a mobile terminal in a mobile communications network,
wherein said terminal having assigned a name to globally identify said terminal which is preferably a fully qualified domain name or a URI,
wherein said terminal further has an identifier to uniquely identify said terminal by entities inside said mobile communications network, and
the apparatus comprising the following steps:
a name resolver for receiving from a node a request to resolve said name of the terminal,
said name resolver being adapted for contacting, in response to said request, a controller that performs said management action;
wherein said apparatus further comprises
said name resolver being adapted for communicating with a database that holds a name-to-controller id mapping;
said database being adapted for determining the controller ID of a controller from a plurality of controllers, which is currently responsible for the terminal, according to the name-to-controller ID mapping;
said name resolver or said controller being adapted to performing said management action for said terminal based on said identifier.

14. The apparatus of claim 13, further comprising:
One or more modules for performing a method according to one of claims 2 to 11.

15. A computer program, which when being executed on a computer, enables said computer to carry out a method according to one of claims 1 to 12.
